# EUROPEAN PATENT SPECIFICATION

(11) **EP 3 158 803 B1**
(45) Date of publication and mention of the grant of the patent: **01.05.2019**
(21) Application number: 15884208.8
(22) Date of filing: 09.03.2015
(51) Int. Cl.: H04W 48/20, H04W 48/18

(54) **PREDICTING ACCESS POINT AVAILABILITY**
VORHERSAGE DER ZUGANGSPUNKTVERFÜGBARKEIT
PRÉDICTION DE LA DISPONIBILITÉ DE POINT D'ACCÈS

(43) Date of publication of application: 26.04.2017
(73) Proprietor: Hewlett Packard Enterprise Development LP, Houston, TX 77070 (US)
(72) Inventor: WANG, Shuai, Beijing 100015 (CN); YU, Xiaofeng, Beijing 100015 (CN); XIE, Junqing, Beijing 100015 (CN)
(74) Representative: Haseltine Lake LLP
(86) International application number: PCT/CN2015/073871
(87) International publication number: WO 2016/141525

(56) References cited:
- EP-A1- 2 224 769
- EP-A1- 2 224 771
- KR-B1- 101 489 665
- US-A1- 2007 019 586
- US-A1- 2007 180 320
- US-A1- 2011 286 437
- AHMAD RAHMATI ET AL: "Context-for-wireless", MOBISYS '07 PROCEEDINGS OF THE 5TH INTERNATIONAL CONFERENCE ON MOBILE SYSTEMS, APPLICATIONS AND SERVICES; JUNE 11 - 14, 2007, SAN JUAN, PR, USA, ACM, NEW YORK, USA, 13 June 2007 (2007-06-13), pages 165-178, XP058232002, DOI: 10.1145/1247660.1247681 ISBN: 978-1-59593-614-1

## Description

### BACKGROUND

Cellular network communications devices, such as cellular phones and cellular network access points, transmit data across cellular networks. While bandwidth for transmitting data across cellular networks is limited, some cellular network communications devices are capable of transferring data across other networks, such as broadband or satellite networks.

Some background information can be found in US 2011/286437 A1 and KR 101489665 B1.

### SUMMARY OF THE INVENTION

The invention relates to a computing device according to claim 1, to a method according to claim 5 and to a non-transitory machine-readable storage medium according to claim 10. Further embodiments are defined in the dependent claim.

The embodiments and/or examples of the following description which are not covered by the appended claims are considered as not being part of the present invention.

### BRIEF DESCRIPTION OF THE DRAWINGS

The following detailed description references the drawings, wherein:
FIG. 1A is a block diagram of an example computing device for generating an access point profile for predicting access point availability.
FIG. 1B is a block diagram of an example computing device for predicting access point availability.
FIG. 2A is an example data flow for predicting access point availability.
FIG. 2B is an example illustration of fingerprint distribution.
FIG. 2C is another example illustration of fingerprint distribution.
FIG. 3 is a flowchart of an example method for predicting access point availability.

### DETAILED DESCRIPTION

Cellular network communications devices, or cellular devices, may use mobile data offloading (MDO) techniques to avoid using cellular networks to transmit data. For example, a cell phone may connect to a broadband network using an included Wi-Fi radio in communication with a Wi-Fi access point, offloading the transmission of data to the broadband network. Offloading the transmission of data to a non-cellular network may have many advantages. For example, use of MDO may increase available cellular network bandwidth and, in some situations, increase the speed and/or reliability of data transmission for individual devices. For users who have network provider enforced limits on cellular data transmission, data offloading may allow those users' devices to transmit data across networks that do not contribute to the users' cellular data limit.

For some MDO methods, cellular devices use Wi-Fi radios to scan for and connect to available Wi-Fi access points that are connected to non-cellular networks. However, using a Wi-Fi radio requires power, and frequent use of a Wi-Fi radio to search for access points may drain a device's battery, and connecting or attempting to connect to an access point with relatively low signal strength may result in relatively slow data transmission and/or data loss, leading to a poor user experience. Predicting wireless access point availability allows a cellular network communications device to predict when a Wi-Fi access point may be within range of the device and, in some implementations, predict the quality, e.g., signal strength, of the access point. This allows the device to leave its Wi-Fi radio off until an access point with a certain predicted signal strength is predicted to be within range, preserving the device's battery and increasing the likelihood of performing a successful handoff.

As used herein, "access point" refers to any access point to a network that is separate from the cellular network on which a cellular device is operating. For example, the access point may be a Wi-Fi router connected to a broadband or satellite network, or - in some implementations - a cellular hotspot connected to a cellular network that is separate from the cellular network on which the cellular device is operating. Cellular devices may communicate with access points in a variety of ways, including Wi-Fi, Wi-Fi Direct, and Bluetooth, to name a few.

To predict wireless access point availability, a wireless availability prediction device may gather cellular fingerprints for successful handoffs, e.g., successful connections to Wi-Fi access points. Cellular fingerprints include data specifying cellular signal strength, e.g., measured in decibel-milliwatts (dBm), for nearby cellular towers, or cells. For example, a cell phone may generate a wireless fingerprint at the time the cell phone connects to a Wi-Fi access point, and the fingerprint may specify the dBm of three nearby cells at the time of the connection.

After gathering cellular fingerprints, the wireless availability prediction device may generate, for at least one access point, an access point profile. As described in further detail below, an access point profile for an access point specifies the probability that a given cellular fingerprint would successfully connect to the access point. In some implementations, access points have multiple profiles, one for each level of access point signal strength, which - as described in further detail below - can be used to not only predict a successful handoff to the access point, but to also predict the access point signal strength of a handoff.

Given a new cellular fingerprint, e.g., one not used to generate an access point profile, the wireless availability prediction device may compare cell signal strength measurements of the new fingerprint to corresponding measurements of access point profiles to determine how similar the new fingerprint is to the fingerprints used to generate the access point profiles. As described in further detail below, similarity measurements may be used to predict which access point profile(s) (if any) the new fingerprint is most similar to, and to predict whether or not a handoff to an access point would be successful.

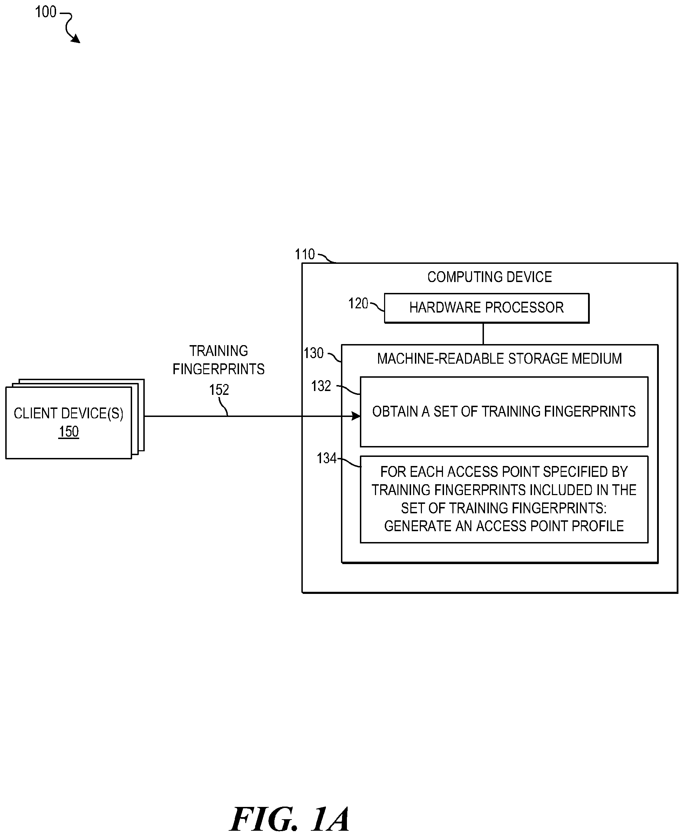

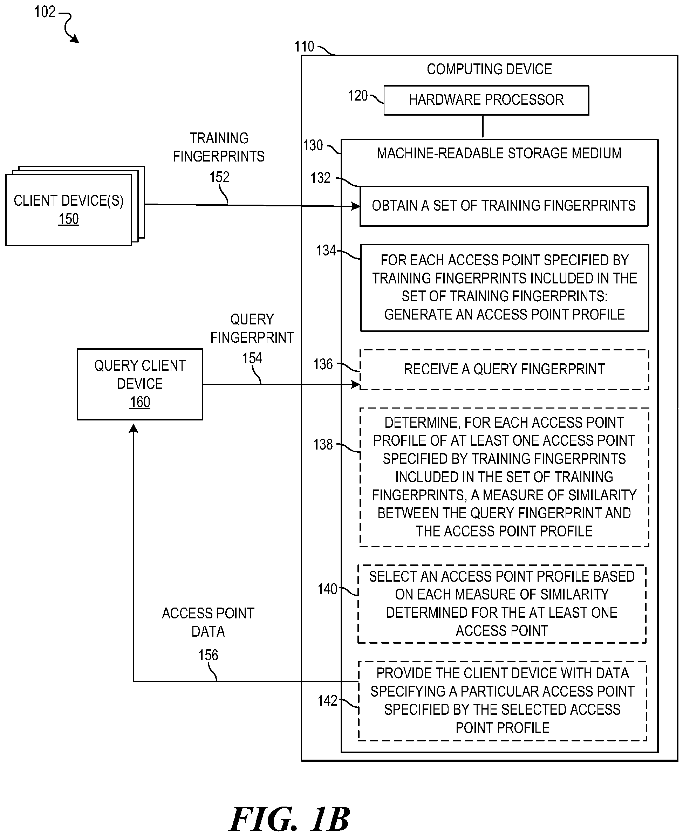

Referring now to the drawings, FIG. 1A is a block diagram 100 of an example computing device 110 for generating an access point profile for predicting access point availability. FIG. 1B is a block diagram 102 of an example computing device 110 for predicting access point availability. Computing device 110 may be, for example, a cellular device, such as a cell phone, a personal computer, a server computer, or any other similar electronic device capable of cellular communications or communicating with cellular devices. In the example implementation of FIGs. 1A and 1B, the computing device 110 includes a hardware processor, 120, and machine-readable storage medium, 130.

Hardware processor 120 may be one or more central processing units (CPUs), semiconductor-based microprocessors, and/or other hardware devices suitable for retrieval and execution of instructions stored in machine-readable storage medium, 130. Hardware processor 120 may fetch, decode, and execute instructions, such as 132-134 and 132-142, to control processes for generating and access point profile and predicting access point availability. As an alternative or in addition to retrieving and executing instructions, hardware processor 120 may include one or more electronic circuits that include electronic components for performing the functionality of one or more instructions.

A machine-readable storage medium, such as 130, may be any electronic, magnetic, optical, or other physical storage device that contains or stores executable instructions. Thus, machine-readable storage medium 130 may be, for example, Random Access Memory (RAM), an Electrically Erasable Programmable Read-Only Memory (EEPROM), a storage device, an optical disc, and the like. In some implementations, storage medium 130 may be a non-transitory storage medium, where the term "non-transitory" does not encompass transitory propagating signals. As described in detail below, machine-readable storage medium 130 may be encoded with a series of executable instructions: 132-134 and/or 132-142, for generating access point profiles and/or predicting access point availability.

As shown in FIG. 1, the computing device 110 obtains, from client device(s) 150, a set of training fingerprints 152 (132). Each training fingerprint specifies, for a client device, an access point to which the client device successfully connected and cellular signal strength for each cellular tower in a set of cellular towers. For example, a cell phone may, in response to successfully connecting to an access point, create and provide to the computing device 110 a training fingerprint that includes signal strength measurements for each of three cells within range of the cell phone at the time it connected to the access point. The client device 150 may be any device in communication with the computing device 110, such as a cellular communications device, personal computer, server computer, or another device capable of sending data across cellular and Wi-Fi networks.

In some implementations, each training fingerprint further specifies, for the corresponding client device, an access point signal strength for the access point to which the client device successfully connected. For example, in addition to specifying the dBm of each nearby cell, a fingerprint may also specify the dBm of the access point to which the corresponding cell phone connected.

The computing device 110 generates, for each access point specified by training fingerprints included in the set of training fingerprints, an access point profile (134). Each access point profile indicates, for each cellular tower in the set of cellular towers specified by a first subset of the set of training fingerprints, a probability that a randomly selected training fingerprint included in the first subset specified a particular cellular signal strength for the cellular tower. Each training fingerprint included in the first subset specifies the access point as the access point to which the client device specified by the training fingerprint included in the first subset successfully connected.

For example, an access point profile may indicate that half of the fingerprints used to generate the profile, e.g., the fingerprints in the first subset, specified a particular signal strength measurement with respect to a particular cell. Accordingly, there is a probability of 0.5 that a fingerprint randomly selected from the fingerprints used to generate the profile, e.g., the first subset, will specify the particular signal strength measurement with respect to the particular cell.

In some implementations, multiple access point profiles are generated for each access point. Each of the access point profiles for each access point are generated using training fingerprints that are different from the training fingerprints used to generate each other access point profile for the access point. For example, each access point may have five profiles, each profile being associated with a range of signal strength measurements, e.g., one profile for very strong access point signal strength, and one each for moderately strong, average, below average, and low signal strength. The training fingerprints used to generate the very strong signal profile for the access point may all specify access point signal strength that meets a certain threshold to be considered strong. Similarly, other profiles may specify separate ranges of access point signal strength. Any number of profiles and ranges of signal strength may be used when generating multiple profiles for an access point.

In some implementations, each training fingerprint specifies a cellular tower to which the client device was in communications with prior to the client device successfully connecting to the access point, e.g., the registered cell. In situations where multiple access point profiles are generated for an access point, differences between subsets of training fingerprints used to generate the profiles may be based on the cellular tower specified by the training fingerprints included in the corresponding subsets. For example, a particular access point might have a first profile generated using fingerprints that specify a first cell to which corresponding client devices were connected prior to the handoff, and it may have a second profile generated using fingerprints that specify a second cell to which corresponding client devices were connected prior to the handoff.

In some implementations, the set of training fingerprints includes only training fingerprints received from a single client device. This allows access point profiles to be generated for each client device. In some implementations, the set of training fingerprints includes training fingerprints received from multiple different client devices. This facilitates generation of crowd-sourced access point profiles.

In some implementations, the computing device 110 receives, from a query client device 160, a query fingerprint 154 (136). The query fingerprint 154 specifies, for each cellular tower in a query set of cellular towers, a query cellular signal strength. For example, a cell phone may, automatically or on-demand, generate a query fingerprint that includes signal strength measurements of nearby cells and provide that query fingerprint to the computing device.

In some implementations, the computing device 110 determines, for each access point profile of at least one access point specified by training fingerprints included in the set of training fingerprints, a measure of similarity between the query fingerprint and the access point profile (138). The measure of similarity is based on the query cellular signal strengths specified by the query fingerprint and each probability associated with each particular cellular signal strength included in the access point profile that matches the query cellular signal strengths. As used herein, similarity, or matching, between fingerprints and access point profiles need not be literal similarity or matching, but may indicate a measure of likelihood that a given fingerprint is similar to fingerprints used to generate a given access point profile. E.g., a fingerprint may be similar to an access point profile if the signal strength measurements specified by the fingerprint are similar to the signal strength measurements specified by fingerprints used to generate the profile.

By way of example, a query fingerprint may specify signal strengths of -100 dBm for a first cell and -90 dBm for a second cell. The computing device 110 may use probabilities associated with matching signal strengths, e.g., -100 dBm and - 90dBm, to determine similarity of the query fingerprint to various access point profiles. E.g., a particular access point profile may indicate that 75% of the fingerprints used to generate the profile had a -100 dBm signal strength measurement for the first cell, and that 50% of the fingerprints had a -90 dBm strength measurement for the second cell. Many methods may be used to calculate a similarity measure between the query fingerprint and the particular access point profile, e.g., an average of the probabilities would provide a similarity measure of 0.625 ((0.75 + 0.5) / 2 = 0.625).

In some implementations, the computing device 110 selects an access point profile based on each measure of similarity determined for the at least one access point (140). For example, measures of similarity may be determined for a set of access points within range of the cells indicated in the query fingerprint, and access point profile with the highest measure of similarity may be selected. Many methods for selecting access point profiles may be used. In some implementations, a similarity measure threshold may be used to determine whether to select an access point profile; e.g., if the query fingerprint does not meet the similarity measure threshold to any access point profiles, then no access point profile is selected. In some implementations, multiple access point profiles may be selected, e.g., the top 3, each profile with a similarity measure above a certain threshold, etc. In some implementations, user preferences may prioritize certain access points. In these situations, at least one access point profile for a preferred access point may be selected, alone or in combination with other access point profiles.

The computing device 110 provides the query client device 160 with data 156 specifying the access point specified by the selected access point profile (142). The data 156 may, for example, cause display of information specifying the particular access point(s) and/or facilitate enabling communications between the query client device 160 and the access point, e.g., by turning on a Wi-Fi radio of the query client device 160 and causing it to connect to the access point.

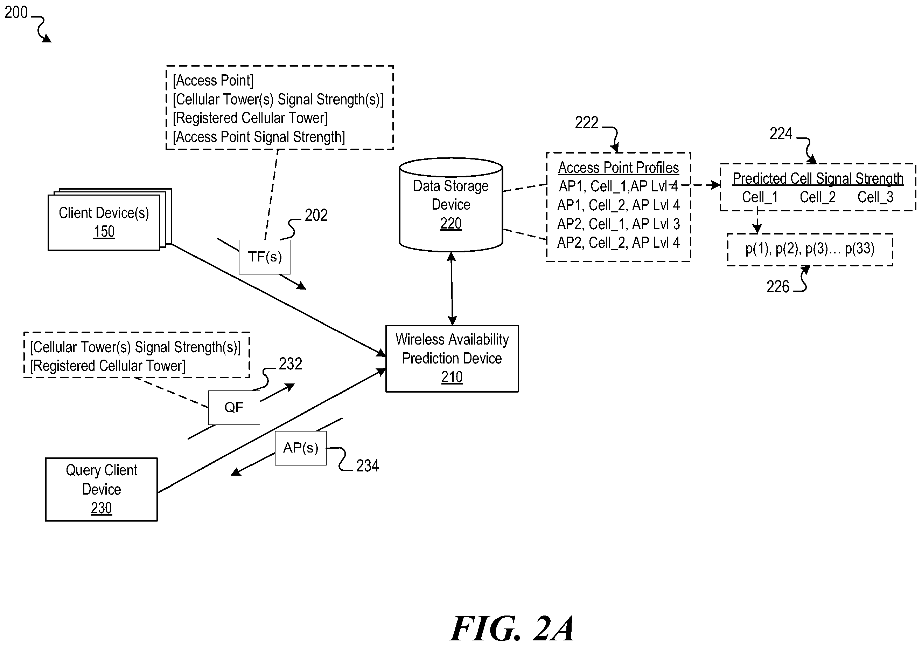

While the computing device 110 is shown separately from the client device(s) 150 in FIGs. 1A and 1B, in some implementations, some or all of the instructions 132-142 may be performed by a client device, alone or in combination with a separate computing device 110. For example, a server computer may gather training fingerprints and generate access point profiles, and client devices could obtain the access point profiles and use them to predict wireless access point availability. Further details regarding the generation of access point profiles and prediction of access point availability are provided in the example described with respect to FIGs. 2A-2C, below.

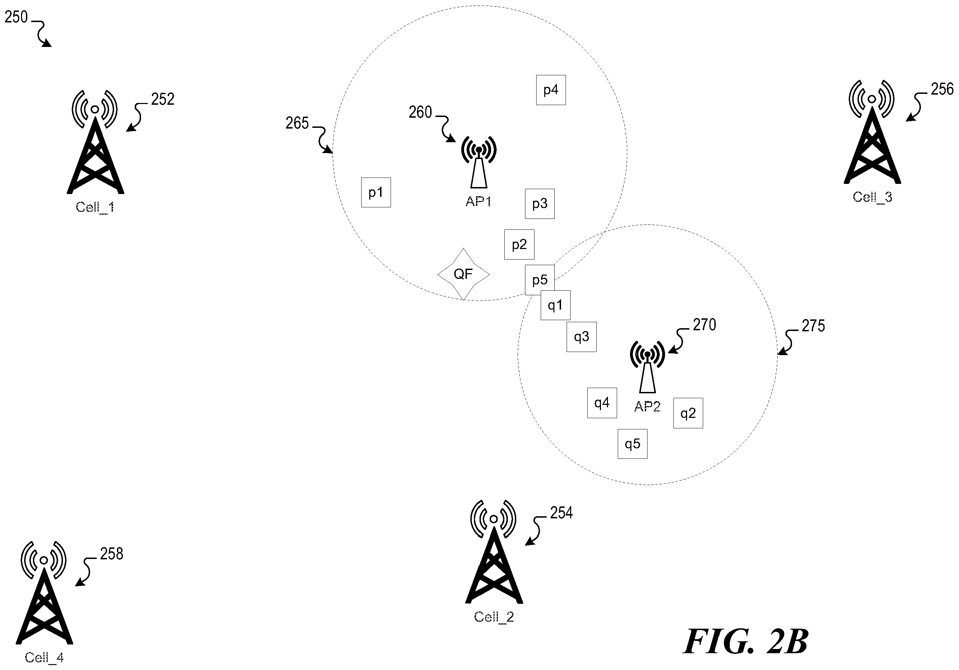

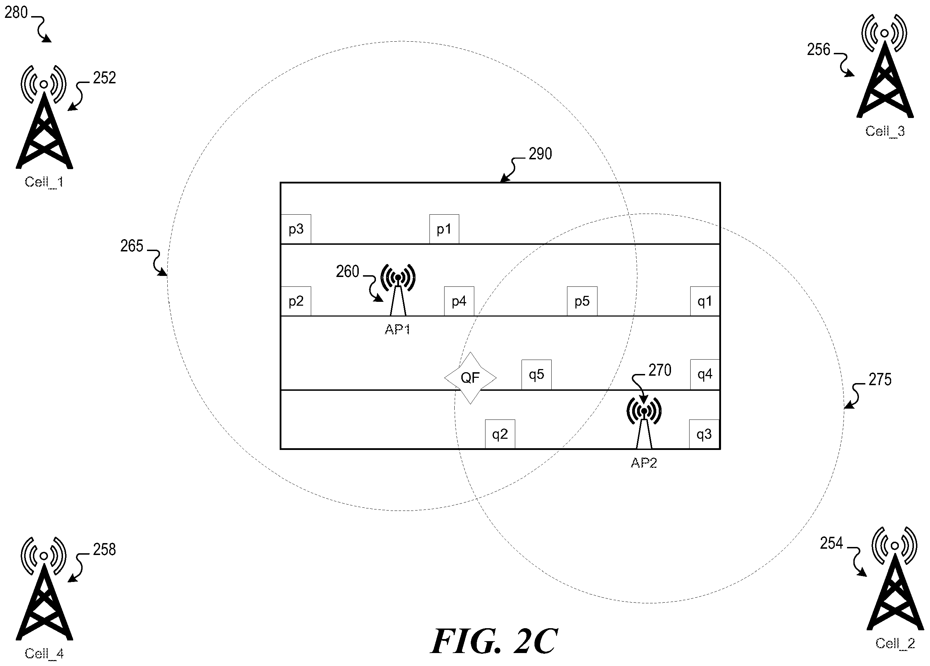

FIG. 2A is an example data flow 200 for predicting access point availability. FIGs. 2B and 2C are example illustrations, 250 and 280, respectively, of fingerprint distribution. The data flow 200 depicts client devices(s) 150 and a query client device 230 in communication with a wireless availability prediction device 210. The wireless availability prediction device 210 is depicted separately from the client and query client devices, and is connected to a data storage device 220. As noted above, in some implementations the wireless availability prediction device 210 may be included within a query client device 230, which may also be one of the client device(s) 150.

In the example data flow 200, the client device(s) 150 provide training fingerprints 202 to the wireless availability prediction device 210. Each training fingerprint 202 may specify, for example, an access point to which the client device connected, a cellular signal strength for each cell tower near the client device during the handoff, and, in some implementations, a registered cellular tower to which the client device was connected prior to the handoff and/or an access point signal strength for the access point at the time of the handoff. An example set of training fingerprints is provided in Table 1, below.

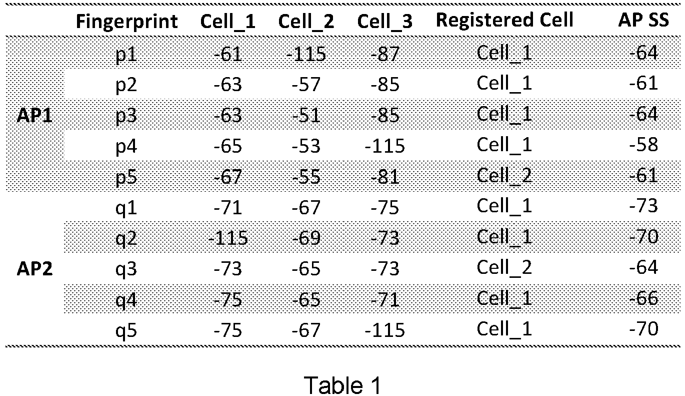

The example training fingerprints shown in Table 1 are for two access points, AP1 and AP2. Each of the fingerprints, p1-p5 for AP1 and q1-q5 for AP2, specify a signal strength measurement with respect to each of cells 1, 2, and 3; a registered cell; and an access point signal strength measurement.

As noted above, the Wireless Availability Prediction Device 210 generates access point profiles 222 using the training fingerprints 202. In implementations where profiles are generated for each access point, each access point may have profiles differentiated by certain values, such as access point signal strength and/or registered cell. When generating multiple profiles based on AP signal strength, the number of profiles may vary depending, for example, on the range of AP signal strength measurements included in the training fingerprints. For example, the training fingerprints may be separated into five subsets according to ranges of AP signal strength; the following table indicates an example distribution of AP signal strength and corresponding subsets, or levels of strength.

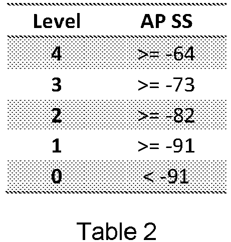

Using the above example signal strength levels, each training fingerprint may correspond to an AP level, as shown in Table 3, below.

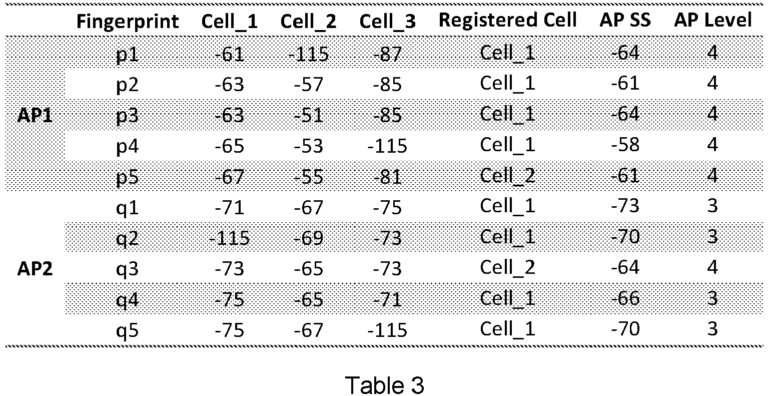

In some implementations, the cellular signal strength measurements of fingerprints may be mapped to strength levels in a manner similar to the AP signal strength measurements. As with the AP signal strength subsets, any number of subsets may be used. By way of example, and as shown in Table 4 below, cell signal strength measurements may be separated into 33 different levels, each level being associated with a particular signal strength range, e.g., -115 to -114 for level 1, -114 to -112 for level 2, and so on, to -52 to -51 for level 33.

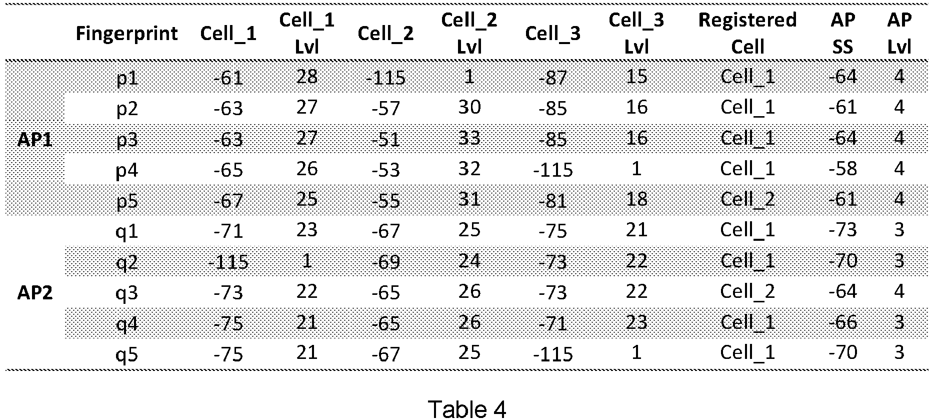

Using the example fingerprints, values, and level mappings above, the wireless availability prediction device 210 may generate multiple access point profiles 222 for each access point. For example, access point AP1 may have two profiles, one for fingerprints registered to Cell_1 and having an AP level of 4, and one for fingerprints registered to Cell_2 and having an AP level of 4. Based on the example fingerprints above, the AP profile for AP1, registered Cell_1, and AP level 4 - which includes fingerprints p1-p4 - may be represented by Table 5, below.

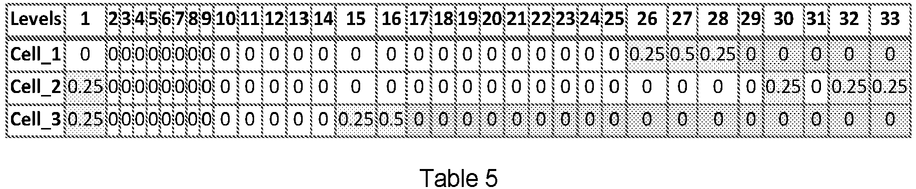

The above representation of an access point profile indicates the probability that a randomly selected training fingerprint from the set of fingerprints associated with AP1, registered to Cell_1, and with an AP level of 4 (e.g., fingerprints p1-p4) will have a certain level of signal strength with respect to cells 1, 2, and 3. For example, the probability that a fingerprint randomly selected from p1-p4 will have a signal strength level of 27 with respect to Cell_1 is 0.5, e.g., a 50% chance. The second access point profile of AP1, e.g., generated using the fingerprint (p5) registered to Cell_2 and having an AP level of 4, may be represented by Table 6, below.

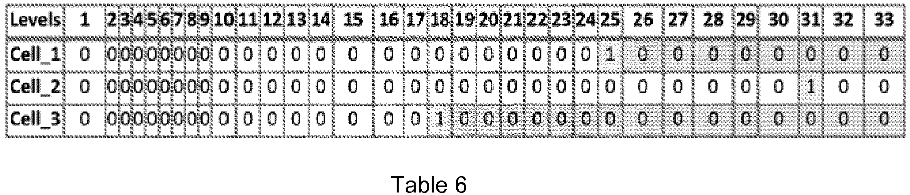

With respect to access point AP2, two access point profiles may also be generated. A representation of one access point profile for AP2, for registered Cell_1 and AP level 3, is shown below in Table 7.

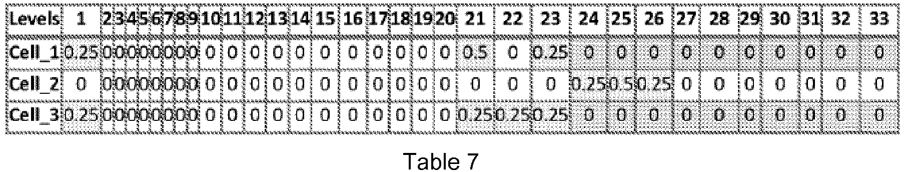

A representation of the second access point profile for AP2, for registered cell Cell_2 and AP level 4, is shown below in Table 8.

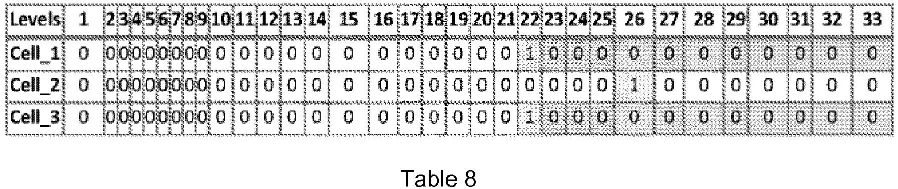

When generating access point profiles, any number of training fingerprints may be used. In addition, while the examples above include five levels of AP signal strength and 33 levels of cellular signal strength, other subdivisions of signal strength measurements may also be used. In some implementations, access point profiles are updated over time, e.g., by adding new fingerprints and/or removing old fingerprints. In the example data flow 200, the wireless availability prediction device 210 stores the access point profiles 222 in a data storage device 220, such as a local hard disk. As described in further detail below, each access point profile in the example data flow 200 specifies predicted cell signal strengths 224 for multiple cells, where the predictions are based on the probabilities 226 associated with signal strength measurements for the cells.

The illustrations 250 and 280 shown in FIGs. 2B and 2C depict an example physical distribution of the above example training fingerprints: p1-5 and q1-q5. FIGs. 2B and 2C both depict four cells, Cell_1 252, Cell_2 254, Cell_3 256, and Cell_4 258; two access points, AP1 and AP2; and a representation of the Wi-Fi range of each access points, e.g., circle 265 for AP1 and 275 for AP2. The illustration 280 of FIG. 2C also includes an example cross-section of a building 290 in which the access points are located. The illustrations 250 and 280 are different visual representations of the same fingerprints. Differences between the illustrations 280 are designed to indicate that geographic proximity to access points and cells is not necessarily a strong indicator of signal strength with respect to the access points and cells. For example, in FIG. 2B, fingerprint p1 is depicted closer to Cell_2 254 than fingerprint p4; however, the p1's signal strength measurement with respect to Cell_2 is significantly lower than p4's signal strength measurement with respect to Cell_2. These types of difference are not uncommon, and may occur for any number of reasons, including signal interference, geographic topology, and blocking structures, e.g., buildings and walls made of a variety of materials.

In data flow 200, a query client device 230 provides a query fingerprint 232 to the wireless availability prediction device 210. The query fingerprint 232 may specifies, for each cell tower in a set of cellular towers, a cellular signal strength measurement. For example, the query fingerprint 232 may include the data represented below in Table 9.

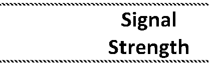

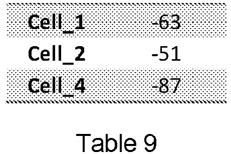

In some implementations, the query fingerprint 232 may also specify a registered cell. For example, if the query client device 230 is currently connected to Cell_1, data indicating the registration may be included in the query fingerprint 232.

The wireless availability prediction system 210 determines, for a number of access points and based on the cellular signal strength measurements included in the query fingerprint 232, a measure of similarity between the cellular signal strength measurements included in the query fingerprint 232 and predicted cellular signal strength measurements 224 of corresponding cellular towers in an access point profile for the access point. In some implementations, to determine measures of similarity, the signal strength measurements included in the query fingerprint 232 are mapped to signal strength levels in a manner similar to that described above with respect to the training fingerprints 202. Using the example levels described above, the each signal strength measurement in the query fingerprint 232 may be assigned a signal level as shown in Table 10.

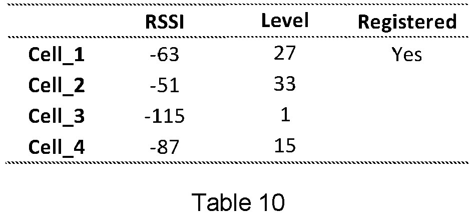

The signal strength levels for each cell of the query fingerprint may be matched to the corresponding predicted cell signal strength levels specified by the access point profiles 222, and the corresponding probability or probabilities may be used to determine similarity. Methods for determining which profiles the query fingerprint will be compared to may vary. For example, the profiles chosen for comparison may be limited to those associated with the same registered cell as the query fingerprint, all access point profiles having predicted measurements for any cell included in the query fingerprint, all access point profiles that meet a threshold AP signal level, or any combination of these, to name a few. In implementations where each access point has multiple access point profiles, similarity measures may be determined for each of the profiles for each access point.

When comparing the query fingerprint 232 to the AP profile for AP1, registered Cell_1, and AP level 4, the following may be observed: the probability that signal level for Cell_1 is 27 is 0.5, the probability that signal level for Cell_2 is 33 is 0.25, the probability that signal level for Cell_3 is 1 is 0.25, and the probability that signal level for Cell_4 is 15 is 0 (not included in the profile). Based on the probabilities, a similarity measure may be determined.

Many methods may be used for determining a similarity measure. For example, probabilities may be added; using the example values above, this method would result in a similarity measure of 1 (0.5 + 0.25 + 0.25 + 0 = 1). As another example, the probabilities may be averaged; using the example values above, this method would result in a similarity measure of 0.25 ((0.5 + 0.25 + 0.25 + 0) / 4). In yet another example, logarithms of each probability measure may be added, substituting a small constant value, such as 1/5000, in place of a 0 probability; using the example values above, this method would result in a similarity measure of - 5.2041 (log(0.5) + log(0.25) + log(0.25) + log(1/5000) = -5.2041).

After determining similarity measures, the wireless availability prediction device selects at least one access point based on the measures of similarity. Many methods exist for selecting the access point(s). For example, the access point having the access point profile with the highest measure of similarity may be selected. Using the summed logarithmic value method described above for determining similarity measures, the similarity measurements of the query fingerprint 232 to each of the access point profiles 222 are as follows: -5.2041 for AP1, Cell_1, AP Lvl 4; -14.7959 for AP1, Cell_2, AP Lvl 4; -14.7959 for AP2, Cell_1, AP Lvl 3; and -11.6990 for AP2, Cell_2, AP Lvl 4. In situations where the access point having the profile with the highest measure of similarity is selected, access point AP1 would be selected.

In some implementations, access points are selected based on the selected access points having an access point profile with i) an access point signal strength that meets a signal strength threshold, and ii) a measure of similarity that meets a similarity threshold. This may prevent selecting an access point that is likely to have a low AP signal strength and ensure selection of an access point that is more likely to result in a successful handoff with an acceptable AP signal strength. E.g., using the example similarity measurement values above, an AP signal strength threshold of 4 and a similarity threshold of -8, only access point AP1 would be selected.

In some implementations, e.g., in situations where multiple access points are selected, the wireless availability prediction device 210 ranks the selected access points based on the access point signal strength and the measure of similarity for a particular access point profile of the access point. Many methods may be used to rank access points. For example, a normalized similarity measure, e.g., normalized to be between 0 and 1, with 1 being most similar and 0 being least similar, may be multiplied by the access point signal strength level, e.g., integer values between 0 and 4. The product may be used to rank access points, such that an access point with a profile having a signal strength level of 3 and similarity measure of 0.5 would be ranked higher than a second access point having a profile with a signal strength level of 4 and a similarity measure of 0.25 (1.5 > 1). In situations where user preferences indicate a preferred access point, the preferred access point may be adjusted to have a higher ranking than other non-preferred access points.

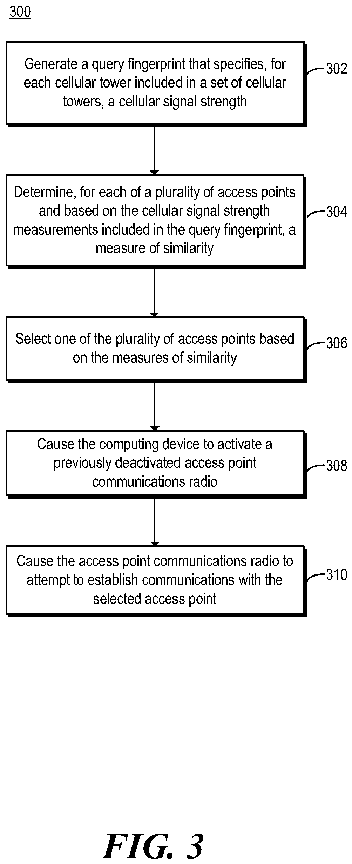

After selecting one or more access points, the wireless availability prediction system provides the query client device 230 with data 234 specifying the selected access point(s). In implementations where multiple access points are ranked, the data 234 also specifies the rankings. The data 234 may be used by the query client device 230 to determine whether to turn on a Wi-Fi or Bluetooth radio and, if so, which access point to attempt a connection to. In situations where the wireless availability prediction device 210 does not predict availability of any access points, it may periodically request and/or receive other query fingerprints until at least one suitable access point is predicted to be available. Using one or more of the methods described above, a cellular device may be able to not only predict the availability of one or more access points for a MDO handoff, but also determine which available access point is most likely to result in a successful handoff. Ranking access points and choosing between them is described in further detail below with reference to FIG. 3.

FIG. 3 is a flowchart of an example method 300 for predicting access point availability. The method 300 may be performed by a computing device, such as a computing device described in FIGs. 1A and 1B, e.g., in the form of a cellular phone. Other computing devices may also be used to execute method 300. Method 300 may be implemented in the form of executable instructions stored on a machine-readable storage medium, such as the storage medium 130, and/or in the form of electronic circuitry.

A query fingerprint is generated that specifies, for each cellular tower included in a set of cellular towers, a cellular signal strength (302). For example, a cell phone may generate a query fingerprint by recording the signal strength of nearby cell towers. The query fingerprint may be generated, for example, periodically at set intervals, in response to user input, and/or in response to receiving a request for a query fingerprint, e.g., from a cellular network carrier.

For each of a plurality of access points and based on the cellular signal strength measurements included in the query fingerprint, the computing device determines a measure of similarity between the cellular signal strength measurements included in the query fingerprint and predicted cellular signal strength measurements of corresponding cell towers in an access point profile for the access point (304). For example, a cell phone may determine similarity for each access point profile by matching the recorded signal strengths to corresponding signal strengths of the access point profile, and using the profile's probability measurements as input to a function that produces a measure of similarity.

In some implementations, the access point profiles were previously provided to the computing device. For example, a carrier may provide the cell phone with the access point profiles. The profiles provided may depend on the cells to which the cell phone is and/or has been registered to in the past. In some implementations, the cell phone may generate the access point profiles, e.g., in the manner described above with reference to FIGs., 2A-2C.

In some implementations, each access point has multiple access point profiles, and the measure of similarity is determined for each of the access point profiles for each of the access points. For example, one access point may have five different profiles, and similarity to the query fingerprint may be measured separately for each of the profiles.

One of the plurality of access points is selected based on the measures of similarity (306). For example, the cell phone may select the access point having an access point profile that is most similar to the query fingerprint. Many methods may be used to determine which access point to select.

In some implementations, each of the access points are ranked based on a particular access point profile of the access point. The ranking for each access point may be based on the measure of similarity determined for the particular access point profile. For example, the cell phone may identify, for each access point, an access point profile that has, relative to the other access point profiles of the access point, the highest measure of similarity to the query fingerprint. The measure of similarity of the most similar access point profile of each access point may then be used to rank the access points, e.g., resulting in ranking the access points according to the measures of similarity of the most similar profiles of the access points.

In some implementations, each particular access point profile for an access point is associated with a registered cellular tower that is different from at least one corresponding registered cellular towers of other access point profiles of the access point, the computing device is registered to a particular cellular tower, and the ranking for each access point is further based on the particular cellular tower to which the computing device is registered and the registered cellular tower associated with the particular access point profile of the access point. For example, if a cell phone is registered to Cell_1, access point profiles that were generated using cellular fingerprints received from devices that were registered to Cell_1 may be ranked higher than other access point profiles.

In some implementations, each particular access point profile is associated with an access point signal strength, and the ranking of each of the plurality of access points is further based on the access point signal strength associated with the particular access point profile. For example, a higher access point signal strength may result in a higher ranking, e.g., if the most similar profile of AP1 has an AP signal strength of 90 - e.g., on a scale of 0 to 100, 100 being the highest signal strength - and the most similar profile of AP2 has an AP signal strength of 60, AP1 may be ranked higher than AP2.

Access points may be ranked using any combination of the above methods and may also be ranked using additional methods. For example, user preferences may result on one access point being ranked higher than another access point, and access point bandwidth congestion - if known or estimated - may also be used to rank access points. Ranking, as used herein, need not be limited to ordinal integer values. For example, ranking may be based on scores, and the scores may be subject to adjustments, e.g., using a multiplier and based on various factors, such as similarity measures, registered cells, AP signal strength, and user preferences. By way of example, a ranking score for an access point profile could use a similarity measure as a base score, which may be multiplied by AP signal strength and, if associated with the same registered cell as the query fingerprint, a constant multiplier such as 1.25.

The computing device enables a previously disabled access point communications radio (308). The computing device may, for example, enable a Wi-Fi radio in response to determining that a Wi-Fi access point is predicted to be within range. E.g., a cell phone may enable the Wi-Fi radio in response to determining that a ranking score - calculated based on similarity measures, AP signal strength, registered cell, etc. - for a particular access point profile meets a threshold ranking score.

The computing device causes the access point communications radio to attempt to establish communications with the selected access point (310). For example, a cell phone may cause the included Wi-Fi communications radio to attempt to connect to the highest ranking access point. In some implementations, if the highest ranking access point is unavailable, or attempted connection fails, the cell phone may attempt to connect to the second highest ranking access point.

While the method 300 is described with respect to a cellular device, other computing devices may also be used for some or all of the steps. For example, a server computer may determine measures of similarity, and select and rank access points in response to receiving a query fingerprint from a cellular device, providing the cellular device with a ranked list of access points to choose from.

The foregoing disclosure describes a number of example implementations for predicting access point availability. As detailed above, examples provide a mechanism for identifying access points that are likely to be good candidates for MDO handoffs.

## Claims

1. A computing device (110) for predicting access point availability, the computing device comprising:
a hardware processor (120); and
a data storage device (130) storing instructions that, when executed by the hardware processor, cause the hardware processor to:
obtain (132) a set of training fingerprints, each training fingerprint specifying, for a client device, an access point to a network that is separate to a cellular network on which the client device is operating, and to which the client device successfully connected, and cellular signal strength for each cellular tower in a set of cellular towers; the computing device **characterized in that** the data storage device stores further instructions that, when executed by the hardware processor, cause the hardware processor to:
for each access point specified by training fingerprints included in the set of training fingerprints:
generate (134) an access point profile for the access point, the access point profile indicating, for each cellular tower in the set of cellular towers specified by a first subset of the set of training fingerprints, a probability that a randomly selected training fingerprint included in the first subset specified a particular cellular signal strength for the cellular tower, wherein each training fingerprint included in the first subset specifies the access point as the access point to which the client device specified by the training fingerprint included in the first subset successfully connected
receive (136), from a client device, a query fingerprint that specifies, for each cellular tower included in a set of cellular towers, a cellular signal strength measurement;
determine (138), for each access point profile of at least one access point specified by training fingerprints included in the set of training fingerprints, a measure of similarity between the query fingerprint and the access point profile, the measure of similarity being based on the query cellular signal strengths specified by the query fingerprint and each probability associated with each particular cellular signal strength included in the access point profile that matches the query cellular signal strengths;
select (140) an access point profile based on each measure of similarity determined for the at least one access point; and
provide (142) the query client device with data specifying a particular access point specified by the selected access point profile.

2. The computing device of claim 1, wherein:
each training fingerprint further specifies, for the corresponding client device, an access point signal strength for the access point to which the client device successfully connected;
the access point profile for each access point is one of a plurality of access point profiles for the access point;
each of the plurality of access point profiles for each access point are generated using a subset of the set of training fingerprints that are different from each other subset of the set of training fingerprints; and
differences between subsets used to generate the plurality of access point profiles are based on the access point signal strength specified by the training fingerprints included in the corresponding subsets.

3. The computing device of claim 1, wherein:
each training fingerprint further specifies a cellular tower to which the client device was in communications with prior to the client device successfully connecting to the access point, the cellular tower being included in the set of cellular towers for which the training fingerprint specified cellular signal strength;
the access point profile for each access point is one of a plurality of access point profiles for the access point;
each of the plurality of access point profiles for each access point are generated using a subset of the set of training fingerprints that are different from each other subset of the set of training fingerprints; and
differences between subsets used to generate the plurality of access point profiles are based on the cellular tower specified by the training fingerprints included in the corresponding subsets.

4. The computing device of claim 1, wherein the set of training fingerprints includes training fingerprints received from a plurality of different client devices.

5. A method for predicting access point availability, implemented by a hardware processor of a computing device, the method comprising:
obtaining (132) a set of training fingerprints, each training fingerprint specifying, for a client device, an access point to a network that is separate to a cellular network on which the client device is operating, and to which the client device successfully connected, and cellular signal strength for each cellular tower in a set of cellular towers; the method **characterized by** comprising:
for each access point specified by training fingerprints included in the set of training fingerprints:
generating (134) an access point profile for the access point, the access point profile indicating, for each cellular tower in the set of cellular towers specified by a first subset of the set of training fingerprints, a probability that a randomly selected training fingerprint included in the first subset specified a particular cellular signal strength for the cellular tower, wherein each training fingerprint included in the first subset specifies the access point as the access point to which the client device specified by the training fingerprint included in the first subset successfully connected
receiving (136), from a client device, a query fingerprint that specifies, for each cellular tower included in a set of cellular towers, a cellular signal strength measurement;
determining (138), for each access point profile of at least one access point specified by training fingerprints included in the set of training fingerprints, a measure of similarity between the query fingerprint and the access point profile, the measure of similarity being based on the query cellular signal strengths specified by the query fingerprint and each probability associated with each particular cellular signal strength included in the access point profile that matches the query cellular signal strengths;
selecting (140) an access point profile based on each measure of similarity determined for the at least one access point; and
providing (142) the query client device with data specifying a particular access point specified by the selected access point profile.

6. The method of claim 5, wherein:
each of the plurality of access points has a plurality of access point profiles; and
the measure of similarity is determined for each of the plurality of access point profiles for each of the plurality of access points.

7. The method of claim 6, wherein each access point profile for an access point is associated with an access point signal strength that is different from corresponding access point signal strengths of other access point profiles of the access point.

8. The method of claim 7, wherein selecting at least one access point comprises:
selecting each access point having an access point profile with i) an access point signal strength that meets a signal strength threshold, and ii) a measure of similarity that meets a similarity threshold.

9. The method of claim 7, wherein:
selecting at least one access point comprises selecting at least two access points;
the method further comprises ranking the at least two selected access points based on, for each of the at least two selected access points, the access point signal strength and the measure of similarity for a particular access point profile of the access point; and
the data specifying the at least one access point specifies each rank of the at least one access point.

10. A non-transitory machine-readable storage medium (130) encoded with instructions executable by a hardware processor of a client device for predicting access point availability, the machine-readable storage medium comprising instructions to cause the hardware processor to:
obtain an access point profile for an access point, the access point profile indicating, for each cellular tower in a set of cellular towers specified by a first subset of a set of training fingerprints, a probability that a randomly selected training fingerprint included in the first subset specified a particular cellular signal strength for the cellular tower, wherein each of training fingerprints included in the set of training fingerprints specifies, for the client device, an access point to a network that is separate to a cellular network on which the client device is operating, and to which the client device is successfully connected, and cellular signal strength for each cellular tower in a set of cellular towers, and each training fingerprint included in the first subset specifies the access point as the access point to which the client device specified by the training fingerprint included in the first subset successfully connected
generate (302) a query fingerprint that specifies, for each cellular tower included in a set of cellular towers, a cellular signal strength measurement;
determine (304), for each access point profile of at least one access point specified by training fingerprints included in the set of training fingerprints, a measure of similarity between the query fingerprint and the access point profile, the measure of similarity being based on the query cellular signal strengths specified by the query fingerprint and each probability associated with each particular cellular signal strength included in the access point profile that matches the query cellular signal strengths;
select (306) one of the plurality of access points based on the measures of similarity;
cause (308) the client device to enable a previously disabled access point communications radio; and
cause (310) the access point communications radio to attempt to establish communications with the selected access point.

11. The machine-readable storage medium of claim 10, wherein:
each of the plurality of access points has a plurality of access point profiles; and
the measure of similarity is determined for each of the plurality of access point profiles for each of the plurality of access points.

12. The machine-readable storage medium of claim 11, wherein the instructions further cause the hardware processor to:
rank each of the plurality of access points based on a particular access point profile of the access point, the ranking for each access point being based on the measure of similarity determined for the particular access point profile.

13. The machine-readable storage medium of claim 12 wherein:
each particular access point profile for an access point is associated with a registered cellular tower that is different from at least one corresponding registered cellular towers of other access point profiles of the access point;
the client device is registered to a particular cellular tower; and
the ranking for each access point is further based on the particular cellular tower to which the client device is registered and the registered cellular tower associated with the particular access point profile of the access point.

14. The machine-readable storage medium of claim 12, wherein:
each particular access point profile is associated with an access point signal strength; and
the ranking of each of the plurality of access points is further based on the access point signal strength associated with the particular access point profile.

## Patentansprüche

1. Rechenvorrichtung (110) zum Vorhersagen einer Verfügbarkeit von Zugriffspunkten, wobei die Rechenvorrichtung Folgendes umfasst:
einen Hardware-Prozessor (120); und
eine Datenspeichervorrichtung (130) zum Speichern von Anweisungen, die, wenn sie durch den Hardware-Prozessor ausgeführt werden, den Hardware-Prozessor zu Folgendem veranlassen:
Erhalten (132) eines Satzes von Übungsfingerabdrücken, wobei jeder Übungsfingerabdruck für eine Clientvorrichtung einen Zugriffspunkt auf ein Netzwerk, das von einem Mobilfunknetzwerk getrennt ist, auf dem die Clientvorrichtung betrieben wird und mit dem die Clientvorrichtung erfolgreich verbunden ist, und eine Mobilfunksignalstärke für jeden Mobilfunkmast in einem Satz von Mobilfunkmasten spezifiziert; wobei die Rechenvorrichtung **dadurch gekennzeichnet ist, dass** die Datenspeichervorrichtung ferner Anweisungen speichert, die, wenn sie durch den Hardware-Prozessor ausgeführt werden, den Hardware-Prozessor zu Folgendem veranlassen:
für jeden Zugriffspunkt, der durch Übungsfingerabdrücke, die in dem Satz von Übungsfingerabdrücken beinhaltet sind, spezifiziert wird:
Erzeugen (134) eines Zugriffspunktprofils für den Zugriffspunkt, wobei das Zugriffspunktprofil für jeden Mobilfunkmast in dem Satz von Mobilfunkmasten, der durch eine erste Untergruppe des Satzes von Übungsfingerabdrücken spezifiziert wird, eine Wahrscheinlichkeit anzeigt, dass ein zufällig ausgewählter Übungsfingerabdruck, der in der ersten Untergruppe beinhaltet ist, eine bestimmte Mobilfunksignalstärke für den Mobilfunkmast spezifizierte, wobei jeder Übungsfingerabdruck, der in der ersten Untergruppe beinhaltet ist, den Zugriffspunkt als den Zugriffspunkt spezifiziert, mit dem die Clientvorrichtung, die durch den Übungsfingerabdruck, der in der ersten Untergruppe beinhaltet ist, spezifiziert wird, erfolgreich verbunden ist
Empfangen (136) eines Abfragefingerabdrucks, der für jeden Mobilfunkmast, der in einem Satz von Mobilfunkmasten beinhaltet ist, eine Mobilfunkstärkenmessung spezifiziert, von einer Clientvorrichtung;
Bestimmen (138) für jedes Zugriffspunktprofil wenigstens eines Zugriffspunktes, der durch Übungsfingerabdrücke, die in dem Satz von Übungsfingerabdrücken beinhaltet sind, spezifiziert wird, einer Ähnlichkeitsmessung zwischen dem Abfragefingerabdruck und dem Zugriffspunktprofil, wobei die Ähnlichkeitsmessung auf den Abfragemobilfunksignalstärken basiert ist, die durch den Abfragefingerabdruck und jede Wahrscheinlichkeit spezifiziert sind, die mit jeder bestimmten Mobilfunkstärke verknüpft ist, die in dem Zugriffspunktprofil beinhaltet ist, das mit den Abfragemobilfunksignalstärken übereinstimmt;
Auswählen (140) eines Zugriffspunktprofils basierend auf jeder Ähnlichkeitsmessung, die für den wenigstens einen Zugriffspunkt bestimmt wird; und
Bereitstellen (142) der Abfrageclientvorrichtung mit Daten, die einen bestimmten Zugriffspunkt spezifizieren, der durch das ausgewählte Zugriffspunktprofil spezifiziert wird.

2. Rechenvorrichtung nach Anspruch 1, wobei:
jeder Übungsfingerabdruck ferner für die entsprechende Clientvorrichtung eine Zugriffspunktsignalstärke für den Zugriffspunkt spezifiziert, mit dem die Clientvorrichtung erfolgreich verbunden ist;
das Zugriffspunktprofil für jeden Zugriffspunkt eines von mehreren Zugriffspunktprofilen für den Zugriffspunkt ist;
jedes der mehreren Zugriffspunktprofile für jeden Zugriffspunkt unter Verwendung einer Untergruppe des Satzes von Übungsfingerabdrücken erzeugt wird, die sich von jeder anderen Untergruppe von Übungsfingerabdrücken unterscheiden; und
Unterschiede zwischen Untergruppen, die zum Erzeugen der mehreren Zugriffspunktprofile verwendet werden, auf der Zugriffspunktsignalstärke basiert sind, die durch die Übungsfingerabdrücke, die in den entsprechenden Untergruppen beinhaltet sind, spezifiziert wird.

3. Rechenvorrichtung nach Anspruch 1, wobei:
jeder Übungsfingerabdruck ferner einen Mobilfunkmast spezifiziert, mit dem die Clientvorrichtung in Verbindung war, bevor die Clientvorrichtung sich erfolgreich mit dem Zugriffspunkt verbunden hat, wobei der Mobilfunkmast in dem Satz von Mobilfunkmasten beinhaltet ist, für den der Übungsfingerabdruck die Mobilfunksignalstärke spezifiziert hat;
das Zugriffspunktprofil für jeden Zugriffspunkt eines von mehreren Zugriffspunktprofilen für den Zugriffspunkt ist;
jedes der mehreren Zugriffspunktprofile für jeden Zugriffspunkt unter Verwendung einer Untergruppe des Satzes von Übungsfingerabdrücken erzeugt wird, die sich von jeder anderen Untergruppe von Übungsfingerabdrücken unterscheiden; und
Unterschiede zwischen Untergruppen, die zum Erzeugen der mehreren Zugriffspunktprofile verwendet werden, auf dem Mobilfunkmast basiert sind, der durch die Übungsfingerabdrücke, die in den entsprechenden Untergruppen beinhaltet sind, spezifiziert wird.

4. Rechenvorrichtung nach Anspruch 1, wobei der Satz von Übungsfingerabdrücken Übungsfingerabdrücke beinhaltet, die von mehreren verschiedenen Clientvorrichtungen empfangen werden.

5. Verfahren zum Vorhersagen einer Verfügbarkeit eines Zugriffspunktes, das durch einen Hardware-Prozessor einer Rechenvorrichtung implementiert wird, wobei das Verfahren Folgendes umfasst:
Erhalten (132) eines Satzes von Übungsfingerabdrücken, wobei jeder Übungsfingerabdruck für eine Clientvorrichtung einen Zugriffspunkt auf ein Netzwerk, das von einem Mobilfunknetzwerk getrennt ist, auf dem die Clientvorrichtung betrieben wird und mit dem die Clientvorrichtung erfolgreich verbunden ist, und eine Mobilfunksignalstärke für jeden Mobilfunkmast in einem Satz von Mobilfunkmasten spezifiziert; wobei das Verfahren durch das Umfassen von Folgendem gekennzeichnet ist:
für jeden Zugriffspunkt, der durch Übungsfingerabdrücke, die in dem Satz von Übungsfingerabdrücken beinhaltet sind, spezifiziert wird:
Erzeugen (134) eines Zugriffspunktprofils für den Zugriffspunkt, wobei das Zugriffspunktprofil für jeden Mobilfunkmast in dem Satz von Mobilfunkmasten, der durch eine erste Untergruppe des Satzes von Übungsfingerabdrücken spezifiziert wird, eine Wahrscheinlichkeit anzeigt, dass ein zufällig ausgewählter Übungsfingerabdruck, der in der ersten Untergruppe beinhaltet ist, eine bestimmte Mobilfunksignalstärke für den Mobilfunkmast spezifizierte, wobei jeder Übungsfingerabdruck, der in der ersten Untergruppe beinhaltet ist, den Zugriffspunkt als den Zugriffspunkt spezifiziert, mit dem die Clientvorrichtung, die durch den Übungsfingerabdruck, der in der ersten Untergruppe beinhaltet ist, spezifiziert wird, erfolgreich verbunden ist
Empfangen (136) eines Abfragefingerabdrucks, der für jeden Mobilfunkmast, der in einem Satz von Mobilfunkmasten beinhaltet ist, eine Mobilfunkstärkenmessung spezifiziert, von einer Clientvorrichtung;
Bestimmen (138) für jedes Zugriffspunktprofil wenigstens eines Zugriffspunktes, der durch Übungsfingerabdrücke, die in dem Satz von Übungsfingerabdrücken beinhaltet sind, spezifiziert wird, einer Ähnlichkeitsmessung zwischen dem Abfragefingerabdruck und dem Zugriffspunktprofil, wobei die Ähnlichkeitsmessung auf den Abfragemobilfunksignalstärken basiert ist, die durch den Abfragefingerabdruck und jede Wahrscheinlichkeit spezifiziert sind, die mit jeder bestimmten Mobilfunkstärke verknüpft ist, die in dem Zugriffspunktprofil beinhaltet ist, das mit den Abfragemobilfunksignalstärken übereinstimmt;
Auswählen (140) eines Zugriffspunktprofils basierend auf jeder Ähnlichkeitsmessung, die für den wenigstens einen Zugriffspunkt bestimmt wird; und
Bereitstellen (142) der Abfrageclientvorrichtung mit Daten, die einen bestimmten Zugriffspunkt spezifizieren, der durch das ausgewählte Zugriffspunktprofil spezifiziert wird.

6. Verfahren nach Anspruch 5, wobei: jeder der mehreren Zugriffspunkte mehrere Zugriffpunkprofile aufweist; und die Ähnlichkeitsmessung für jedes der mehreren Zugriffspunktprofile für jeden der mehreren Zugriffspunkte bestimmt wird.

7. Verfahren nach Anspruch 6, wobei jedes Zugriffspunktprofil für einen Zugriffspunkt mit einer Zugriffspunktsignalstärke verknüpft ist, die sich von entsprechenden Zugriffspunktsignalstärken anderer Zugriffspunktprofile des Zugriffspunktes unterscheidet.

8. Verfahren nach Anspruch 7, wobei das Auswählen wenigstens eines Zugriffspunktes Folgendes umfasst:
Auswählen jedes Zugriffspunktes mit einem Zugriffspunktprofil mit i) einer Zugriffspunktsignalstärke, die einen Signalstärkengrenzwert erfüllt, und ii) einer Ähnlichkeitsmessung, die einen Ähnlichkeitsgrenzwert erfüllt.

9. Verfahren nach Anspruch 7, wobei:
das Auswählen wenigstens eines Zugriffspunktes das Auswählen wenigstens zweier Zugriffspunkte umfasst;
das Verfahren ferner das Aufstellen der wenigstens zwei ausgewählten Zugriffspunkte basierend auf für jeden der wenigstens zwei ausgewählten Zugriffspunkte der Zugriffspunktsignalstärke und der Ähnlichkeitsmessung für ein bestimmtes Zugriffspunktprofil des Zugriffspunktes umfasst; und die Daten, die den wenigstens einen Zugriffspunkt spezifizieren, jede Stellung des wenigstens einen Zugriffspunktes spezifizieren.

10. Nichtflüchtiges maschinenlesbares Speichermedium (130), das mit durch einen Hardware-Prozessor einer Clientvorrichtung ausführbaren Anweisungen zum Vorhersagen einer Verfügbarkeit eines Zugriffspunktes kodiert ist, wobei das maschinenlesbare Speichermedium Anweisungen umfasst, um den Hardware-Prozessor zu Folgendem zu veranlassen:
Erhalten eines Zugriffspunktprofils für einen Zugriffspunkt, wobei das Zugriffspunktprofil für jeden Mobilfunkmast in dem Satz von Mobilfunkmasten, der durch eine erste Untergruppe eines Satzes von Übungsfingerabdrücken spezifiziert wird, eine Wahrscheinlichkeit anzeigt, dass ein zufällig ausgewählter Übungsfingerabdruck, der in der ersten Untergruppe beinhaltet ist, eine bestimmte Mobilfunksignalstärke für den Mobilfunkmast spezifizierte, wobei jeder der Übungsfingerabdrücke, die in der ersten Untergruppe beinhaltet sind, einen Zugriffspunkt für die Clientvorrichtung zu einem Netzwerk, das von einem Mobilfunknetzwerk getrennt ist, auf dem die Clientvorrichtung betrieben wird und mit dem die Clientvorrichtung erfolgreich verbunden ist, und eine Mobilfunksignalstärke für jeden Mobilfunkmast in einem Satz von Mobilfunkmasten spezifiziert, und jeder Übungsfingerabdruck, der in der ersten Untergruppe beinhaltet ist, den Zugriffspunkt als den Zugriffspunkt spezifiziert, mit dem die Clientvorrichtung, die durch den Übungsfingerabdruck spezifiziert wird, der in der ersten Untergruppe beinhaltet ist, erfolgreich verbunden ist
Erzeugen (302) eines Abfragefingerabdrucks, der für jeden Mobilfunkmast, der in einem Satz von Mobilfunkmasten beinhaltet ist, eine Mobilfunkstärkenmessung spezifiziert;
Bestimmen (304) für jedes Zugriffspunktprofil wenigstens eines Zugriffspunktes, der durch Übungsfingerabdrücke, die in dem Satz von Übungsfingerabdrücken beinhaltet sind, spezifiziert wird, einer Ähnlichkeitsmessung zwischen dem Abfragefingerabdruck und dem Zugriffspunktprofil, wobei die Ähnlichkeitsmessung auf den Abfragemobilfunksignalstärken basiert ist, die durch den Abfragefingerabdruck und jeder Wahrscheinlichkeit spezifiziert sind, die mit jeder bestimmten Mobilfunkstärke verknüpft ist, die in dem Zugriffspunktprofil beinhaltet ist, das mit den Abfragemobilfunksignalstärken übereinstimmt;
Auswählen (306) eines der mehreren Zugriffspunkte basierend auf den Ähnlichkeitsmessungen;
Veranlassen (308) der Clientvorrichtung, einen zuvor deaktivierten Zugriffspunktverbindungsfunk zu aktivieren; und
Veranlassen (310) des Zugriffspunktverbindungsfunks, zu versuchen, eine Verbindung mit dem ausgewählten Zugriffspunkt herzustellen.

11. Maschinenlesbares Speichermedium nach Anspruch 10, wobei: jeder der mehreren Zugriffspunkte mehrere Zugriffpunkprofile aufweist; und die Ähnlichkeitsmessung für jedes der mehreren Zugriffspunktprofile für jeden der mehreren Zugriffspunkte bestimmt wird.

12. Maschinenlesbares Speichermedium nach Anspruch 11, wobei die Anweisungen ferner den Hardware-Prozessor zu Folgendem veranlassen:
Aufstellen jedes der mehreren Zugriffspunkte basierend auf einem bestimmten Zugriffspunktprofil des Zugriffspunktes, wobei das Aufstellen jedes Zugriffspunktes auf der Ähnlichkeitsmessung basiert, die für das bestimmte Zugriffspunktprofil bestimmt wird.

13. Maschinenlesbares Speichermedium nach Anspruch 12, wobei:
jedes bestimmte Zugriffspunktprofil für einen Zugriffspunkt mit einem registrierten Mobilfunkmast verknüpft ist, der sich von wenigstens einem entsprechenden registrierten Mobilfunkmast von anderen Zugriffspunktprofilen des Zugriffspunktes unterscheidet;
die Clientvorrichtung mit einem bestimmten Mobilfunkmast registriert ist; und
das Aufstellen für jeden Zugriffspunkt ferner auf dem bestimmten Mobilfunkmast basiert, mit dem die Clientvorrichtung registriert ist und der registrierte Mobilfunkmast mit dem bestimmten Zugriffspunktprofil des Zugriffspunktes verknüpft ist.

14. Maschinenlesbares Speichermedium nach Anspruch 12, wobei:
jedes bestimmte Zugriffspunktprofil mit einer Zugriffspunktsignalstärke verknüpft ist; und
das Aufstellen jedes der mehreren Zugriffspunkte ferner auf der Zugriffspunktsignalstärke basiert ist, die mit dem bestimmten Zugriffspunktprofil verknüpft ist.

## Revendications

1. Dispositif informatique (110) pour prédire la disponibilité d'un point d'accès, le dispositif informatique comprenant :
un processeur matériel (120) ; et
un dispositif de stockage de données (130) stockant des instructions qui, lorsqu'elles sont exécutées par le processeur matériel, amènent le processeur matériel à :
obtenir (132) un ensemble d'empreintes digitales d'apprentissage, chaque empreinte digitale d'apprentissage spécifiant, pour un dispositif client, un point d'accès à un réseau séparé d'un réseau cellulaire sur lequel le dispositif client fonctionne, et auquel le dispositif client s'est connecté avec succès, et l'intensité de signal cellulaire pour chaque tour cellulaire dans un ensemble de tours cellulaires ; le dispositif informatique étant **caractérisé en ce que** le dispositif de stockage de données stocke d'autres instructions qui, lorsqu'elles sont exécutées par le processeur matériel, amènent le processeur matériel à :
pour chaque point d'accès spécifié par des empreintes digitales d'apprentissage incluses dans l'ensemble d'empreintes digitales d'apprentissage :
générer (134) un profil de point d'accès pour le point d'accès, le profil de point d'accès indiquant, pour chaque tour cellulaire dans l'ensemble de tours cellulaires spécifiées par un premier sous-ensemble de l'ensemble d'empreintes digitales d'apprentissage, une probabilité qu'une empreinte digitale d'apprentissage sélectionnée au hasard incluse dans le premier sous-ensemble ait spécifié une intensité de signal cellulaire particulière pour la tour cellulaire, chaque empreinte digitale d'apprentissage incluse dans le premier sous-ensemble spécifiant le point d'accès en tant que point d'accès auquel le dispositif client spécifié par l'empreinte digitale d'apprentissage incluse dans le premier sous-ensemble est connecté ;
recevoir (136), à partir d'un dispositif client, une empreinte digitale de requête spécifiant, pour chaque tour cellulaire incluse dans un ensemble de tours cellulaires, une mesure d'intensité de signal cellulaire ;
déterminer (138), pour chaque profil de point d'accès d'au moins un point d'accès spécifié par des empreintes digitales d'apprentissage incluses dans l'ensemble d'empreintes digitales d'apprentissage, une mesure de similarité entre l'empreinte digitale de requête et le profil de point d'accès, la mesure de similarité étant basée sur les intensités de signal cellulaire de requête spécifiées par l'empreinte digitale de requête et chaque probabilité associée à chaque intensité de signal cellulaire particulière incluse dans le profil de point d'accès qui correspond aux intensités de signal cellulaire de requête ;
sélectionner (140) un profil de point d'accès sur la base de chaque mesure de similarité déterminée pour l'au moins un point d'accès ; et
fournir (142) au dispositif client de requête des données spécifiant un point d'accès particulier spécifié par le profil de point d'accès sélectionné.

2. Dispositif informatique selon la revendication 1, dans lequel :
chaque empreinte digitale d'apprentissage spécifie en outre, pour le dispositif client correspondant, une intensité de signal de point d'accès pour le point d'accès auquel le dispositif client s'est connecté avec succès ;
le profil de point d'accès pour chaque point d'accès est l'un parmi une pluralité de profils de points d'accès pour le point d'accès ;
chacun de la pluralité de profils de points d'accès pour chaque point d'accès est généré en utilisant un sous-ensemble de l'ensemble d'empreintes digitales d'apprentissage différent de chaque autre sous-ensemble de l'ensemble d'empreintes digitales d'apprentissage ; et
les différences entre les sous-ensembles utilisés pour générer la pluralité de profils de points d'accès sont basées sur l'intensité de signal de point d'accès spécifiée par les empreintes digitales d'apprentissage incluses dans les sous-ensembles correspondants.

3. Dispositif informatique selon la revendication 1, dans lequel :
chaque empreinte digitale d'apprentissage spécifie en outre une tour cellulaire avec laquelle le dispositif client était en communication avant la connexion réussie du dispositif client au point d'accès, la tour cellulaire étant incluse dans l'ensemble de tours cellulaires pour lequel l'empreinte digitale d'apprentissage a spécifié l'intensité de signal cellulaire ;
le profil de point d'accès pour chaque point d'accès est l'un parmi une pluralité de profils de points d'accès pour le point d'accès ;
chacun de la pluralité de profils de points d'accès pour chaque point d'accès est généré en utilisant un sous-ensemble de l'ensemble d'empreintes digitales d'apprentissage différent de chaque autre sous-ensemble de l'ensemble d'empreintes digitales d'apprentissage ; et
les différences entre les sous-ensembles utilisés pour générer la pluralité de profils de points d'accès sont basées sur la tour cellulaire spécifiée par les empreintes digitales d'apprentissage incluses dans les sous-ensembles correspondants.

4. Dispositif informatique selon la revendication 1, dans lequel l'ensemble d'empreintes digitales d'apprentissage inclut des empreintes digitales d'apprentissage reçues à partir d'une pluralité de dispositifs clients différents.

5. Procédé pour prédire la disponibilité d'un point d'accès, mis en oeuvre par un processeur matériel d'un dispositif informatique, le procédé comprenant :
l'obtention (132) d'un ensemble d'empreintes digitales d'apprentissage, chaque empreinte digitale d'apprentissage spécifiant, pour un dispositif client, un point d'accès à un réseau séparé d'un réseau cellulaire sur lequel le dispositif client fonctionne, et auquel le dispositif client s'est connecté avec succès, et l'intensité de signal cellulaire pour chaque tour cellulaire dans un ensemble de tours cellulaires ;
le procédé étant **caractérisé en ce qu'**il comprend :
pour chaque point d'accès spécifié par des empreintes digitales d'apprentissage incluses dans l'ensemble d'empreintes digitales d'apprentissage :
la génération (134) d'un profil de point d'accès pour le point d'accès, le profil de point d'accès indiquant, pour chaque tour cellulaire dans l'ensemble de tours cellulaires spécifiées par un premier sous-ensemble de l'ensemble d'empreintes digitales d'apprentissage, une probabilité qu'une empreinte digitale d'apprentissage sélectionnée au hasard incluse dans le premier sous-ensemble ait spécifié une intensité de signal cellulaire particulière pour la tour cellulaire, chaque empreinte digitale d'apprentissage incluse dans le premier sous-ensemble spécifiant le point d'accès en tant que point d'accès auquel le dispositif client spécifié par l'empreinte digitale d'apprentissage incluse dans le premier sous-ensemble est connecté ;
la réception (136), à partir d'un dispositif client, d'une empreinte digitale de requête spécifiant, pour chaque tour cellulaire incluse dans un ensemble de tours cellulaires, d'une mesure d'intensité de signal cellulaire ;
la détermination (138), pour chaque profil de point d'accès d'au moins un point d'accès spécifié par des empreintes digitales d'apprentissage incluses dans l'ensemble d'empreintes digitales d'apprentissage, d'une mesure de similarité entre l'empreinte digitale de requête et le profil de point d'accès, la mesure de similarité étant basée sur les intensités de signal cellulaire de requête spécifiées par l'empreinte digitale de requête et chaque probabilité associée à chaque intensité de signal cellulaire particulière incluse dans le profil de point d'accès qui correspond aux intensités de signal cellulaire de requête ;
la sélection (140) d'un profil de point d'accès sur la base de chaque mesure de similarité déterminée pour l'au moins un point d'accès ; et
la fourniture (142) au dispositif client de requête de données spécifiant un point d'accès particulier spécifié par le profil de point d'accès sélectionné.

6. Procédé selon la revendication 5, dans lequel :
chacun de la pluralité de points d'accès a une pluralité de profils de points d'accès ; et
la mesure de similarité est déterminée pour chacun de la pluralité de profils de points d'accès pour chacun de la pluralité de points d'accès.

7. Procédé selon la revendication 6, dans lequel chaque profil de point d'accès pour un point d'accès est associé à une intensité de signal de point d'accès différente des intensités de signal de point d'accès correspondantes d'autres profils de points d'accès du point d'accès.

8. Procédé selon la revendication 7, dans lequel la sélection d'au moins un point d'accès comprend :
la sélection de chaque point d'accès ayant un profil de point d'accès avec i) une intensité de signal de point d'accès qui atteint un seuil d'intensité de signal, et ii) une mesure de similarité qui répond à un seuil de similarité.

9. Procédé selon la revendication 7, dans lequel :
la sélection d'au moins un point d'accès comprend la sélection d'au moins deux points d'accès ;
le procédé comprend en outre le classement des au moins deux points d'accès sélectionnés sur la base, pour chacun des au moins deux points d'accès sélectionnés, de l'intensité de signal de point d'accès et de la mesure de similarité pour un profil de point d'accès particulier du point d'accès ; et
les données spécifiant l'au moins un point d'accès spécifient chaque rang de l'au moins un point d'accès.

10. Support de stockage non transitoire lisible par machine (130) codé avec des instructions exécutables par un processeur matériel d'un dispositif client pour prédire la disponibilité d'un point d'accès, le support de stockage lisible par machine comprenant des instructions pour amener le processeur matériel à :
obtenir un profil de point d'accès pour un point d'accès, le profil de point d'accès indiquant, pour chaque tour cellulaire dans un ensemble de tours cellulaires spécifiées par un premier sous-ensemble d'un ensemble d'empreintes digitales d'apprentissage, une probabilité qu'une empreinte digitale d'apprentissage sélectionnée au hasard incluse dans le premier sous-ensemble ait spécifié une intensité de signal cellulaire particulière pour la tour cellulaire, chacune des empreintes digitales d'apprentissage incluses dans l'ensemble d'empreintes digitales d'apprentissage spécifiant, pour le dispositif client, un point d'accès à un réseau séparé d'un réseau cellulaire sur lequel le dispositif client fonctionne, auquel le dispositif client est connecté avec succès, et l'intensité de signal cellulaire pour chaque tour cellulaire dans un ensemble de tours cellulaires, et chaque empreinte digitale d'apprentissage incluse dans le premier sous-ensemble spécifie le point d'accès en tant que point d'accès auquel le dispositif client spécifié par l'empreinte digitale d'apprentissage incluse dans le premier sous-ensemble s'est connecté avec succès ;
générer (302) une empreinte digitale de requête qui spécifie, pour chaque tour cellulaire incluse dans un ensemble de tours cellulaires, une mesure d'intensité de signal cellulaire ;
déterminer (304), pour chaque profil de point d'accès d'au moins un point d'accès spécifié par des empreintes digitales d'apprentissage incluses dans l'ensemble d'empreintes digitales d'apprentissage, une mesure de similarité entre l'empreinte digitale de requête et le profil de point d'accès, la mesure de similarité étant basée sur les intensités de signal cellulaire de requête spécifiées par l'empreinte digitale de requête et chaque probabilité associée à chaque intensité de signal cellulaire particulière incluse dans le profil de point d'accès qui correspond aux intensités de signal cellulaire de requête ;
sélectionner (306) l'un de la pluralité de points d'accès sur la base des mesures de similarité ;
amener (308) le dispositif client à activer une radio de communications de point d'accès précédemment désactivée ; et
amener (310) la radio de communications de point d'accès à tenter d'établir des communications avec le point d'accès sélectionné.

11. Support de stockage lisible par machine selon la revendication 10, dans lequel :
chacun de la pluralité de points d'accès a une pluralité de profils de points d'accès ; et
la mesure de similarité est déterminée pour chacun de la pluralité de profils de points d'accès pour chacun de la pluralité de points d'accès.

12. Support de stockage lisible par machine selon la revendication 11, dans lequel les instructions amènent en outre le processeur matériel à :
classer chacun de la pluralité de points d'accès sur la base d'un profil de point d'accès particulier du point d'accès, le classement pour chaque point d'accès étant basé sur la mesure de similarité déterminée pour le profil de point d'accès particulier.

13. Support de stockage lisible par machine selon la revendication 12, dans lequel :
chaque profil de point d'accès particulier pour un point d'accès est associé à une tour cellulaire enregistrée différente d'au moins l'une des tours cellulaires enregistrées correspondantes d'autres profils de points d'accès du point d'accès ;
le dispositif client est enregistré sur une tour cellulaire particulière ; et
le classement de chaque point d'accès est en outre basé sur la tour cellulaire particulière sur laquelle le dispositif client est enregistré et sur la tour cellulaire enregistrée associée au profil de point d'accès particulier du point d'accès.

14. Support de stockage lisible par machine selon la revendication 12, dans lequel :
chaque profil de point d'accès particulier est associé à une intensité de signal de point d'accès ; et
le classement de chacun de la pluralité de points d'accès est en outre basé sur l'intensité de signal de point d'accès associée au profil de point d'accès particulier.
